# EUROPÄISCHE PATENTANMELDUNG

(11) **EP 0 531 885 A1**
(43) Veröffentlichungstag der Anmeldung: **17.03.1993**
(21) Anmeldenummer: 92115063.7
(22) Anmeldetag: 03.09.1992
(51) Int. Cl.: A01F 15/07

(54) **Netzstreifen zum Umhüllen von Presskörpern aus Halmgut**

(30) Priorität: 13.09.1991 DE 4130508
(71) Anmelder: BP Chemicals PlasTec GmbH, D-89165 Dietenheim (DE)
(72) Erfinder: Müller, Franz, W-6120 Michelstadt-Steinbach (DE); Klinger, Ottmar, Dipl.-Agr.-Ing., W-6120 Erbach/Dorf-Erbach (DE)
(74) Vertreter: Möbus, Rudolf, Dipl.-Ing.

(57) **Zusammenfassung**

Der Netzstreifen (12) zum überlappenden und selbsthaltenden Umhüllen von Preßkörpern, die aus einem Halmgut gefertigt sind, ist aus einem Material gefertigt, das Zusätze aufweist, die durch Umwelteinwirkung in absehbarer Zeit eine Auflösung mindestens des Netzverbandes (13) bewirken. Das Material für die Netzstreifen (12) kann auch aus organischen, ungiftigen und von Vieh freßbaren Materialien gefertigt sein, das zusätzlich die vorstehend erwähnten Eigenschaften hat, beispielsweise aus einem zur Netzbildung plastifizierbaren Stärkepräparat.

## Beschreibung

Die Erfindung betrifft einen Netzstreifen zum überlappenden und selbsthaltenden Umhüllen von Preßkörpern, die aus mindestens einer Preßlage aus Stroh, Heu oder einem anderen, in die Netzöffnungen eintretbaren Halmgut gefertigt sind.

Durch das DE-GM 83 11 900 ist bereits vorgeschlagen worden, einen zylindrischen Preßballen auf seiner Mantelfläche mit mindestens einem Netzstreifen zu umfangen, dessen Enden sich überlappen und der durch in die Netzöffnungen eintretende Halme in seiner Umhüllungslage gehalten wird. Diese Netzhalterung von Preßkörpern aus Halmgut hat sich in der Praxis gut bewährt. Die Netzstreifen werden bislang aus einem witterungsbeständigen Kunststoffmaterial gefertigt. Die Netzstreifen lassen sich nachträglich wieder leicht von den Preßkörpern entfernen, doch muß darauf geachtet werden, daß sie nicht in das Futter von Tieren gelangen, und die gebrauchten Netzumhüllungen müssen zur Müllabfuhr gegeben werden.

Der Erfindung liegt die Aufgabe zugrunde, Netzstreifen für den eingangs genannten Einsatzzweck so auszubilden, daß sie keine Entsorgungsprobleme bilden.

Die gestellte Aufgabe wird mit einem Netzstreifen der eingangs genannten Art erfindungsgemäß dadurch gelöst, daß er aus einem Material gefertigt ist, das mit auch an sich bekannten Zusätzen versehen ist, die durch Umwelteinwirkung in absehbarer Zeit eine Auflösung mindestens des Netzverbandes bewirken. Dadurch wird erreicht, daß sich die Netz-umhüllung, die in der Regel nur wenige Monate, höchstens ein Jahr, als Umhüllung benötigt wird, von selbst zerfällt. Dabei können unter Berücksichtigung einer gewünschten Lebensdauer der Netzstreifen unterschiedliche Zusätze vorgesehen werden, beispielsweise ein Zusatz, der unter längerfristiger Lichteinwirkung eine den Kunststoffverband auflösende Veränderung des Kunststoffmaterials bewirkt. Dem Kunststoffmaterial kann aber auch ein Zusatz beigefügt sein, der durch längerfristige Einwirkung von Luft und/oder Feuchtigkeit eine den Kunststoffverband auflösende Veränderung bewirkt. Vorteilhafterweise kann der Netzstreifen aus einem organischen, ungiftigen und von Vieh freßbaren Materialien gefertigt sein, von denen mindestens eines auch durch längerfristige Umwelteinwirkung, nämlich durch Licht und/oder Feuchtigkeit und/oder Lufteinwirkung, eine mindestens den Netzverband auflösende Veränderung erfährt.

Ein erfindungsgemäß ausgebildeter Netzstreifen muß nicht mehr über die Müllabfuhr entsorgt werden. Gebrauchte Netzstreifen können von den Landwirten selbst zum Zerfallen ausgelegt, verfüttert oder kompostiert werden. Ein mögliches Zusatzmaterial ist beispielsweise ein zur Netzbildung plastifizierbares Stärkepräparat.

Die beiliegende schematische Zeichnung zeigt ein Ausführungsbeispiel eines erfindungsgemäß ausgebildeten Netzstreifens in einer bestimmungsgemäßen Anwendung.

Im einzelnen zeigen:
- Fig. 1: eine Ansicht eines netzumhüllten Wickelballens in Richtung seiner Wickelachse;
- Fig. 2: eine Seitenansicht des Wickelballens senkrecht zu seiner Wickelachse.

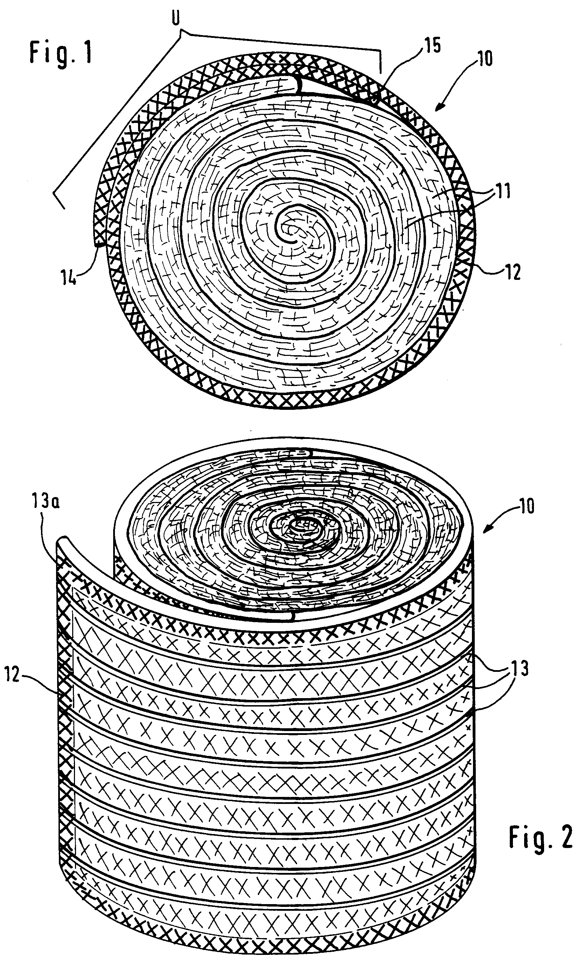

Die Zeichnung zeigt einen beispielsweise aus dem Stroh gedroschener Getreidehalme aus mehreren Wickellagen 11 gefertigten Wickelballen, der von einem in Fig. 1 durch Kreuze gekennzeichneten Netzstreifen 12 umfangen ist. Die Länge des Netzstreifens 12 ist so gewählt, daß sich seine Endbereiche über einen relativ großen Umfangsbereich U überlappen. Der Netzstreifen 12 ist aus einem Raschelgewirk aus Folienbändchen 13 gefertigt, und die Folie, aus welcher die Bändchen 13 geschnitten sind, weist die eingangs erwähnten und in den Patentansprüchen angeführten Zusätze auf.

Der Netzstreifen ist beim dargestellten Ausführungsbeispiel an seinen Endrändern 14 und 15 und an seinen beiden Längsrändern mit einer gut sichtbaren Randmarkierung versehen, welche eine Kontrolle des ordnungsgemäßen Sitzes und einer sauberen Überlappung der Endbereiche des Netzstreifens 12 erlaubt.

Durch die von der Oberfläche der außenliegenden Wickellagen 11 des Wickelballens 10 abstehenden Halmenden, die durch die Maschenöffnungen des Netzstreifens hindurchragen, wird der gesamte Netzstreifen 12, einschließlich des überlappenden Endbereiches, sicher an der Oberfläche des Wickelballens 10 gehalten, so daß keine besonderen Maßnahmen zur Sicherung des Netzstreifens 12 auf dem Wickelballen 10 erforderlich sind.

## Patentansprüche

1. Netzstreifen zum überlappenden und selbsthaltenden Umhüllen von Preßkörpern, die aus mindestens einer Preßlage aus Stroh, Heu oder einem anderen, in die Netzöffnungen eintretbaren Halmgut gefertigt sind, dadurch gekennzeichnet, daß der Netzstreifen (12) aus einem Material gefertigt ist, das mit auch an sich bekannten Zusätzen versehen ist, die durch Umwelteinwirkung in absehbarer Zeit eine Auflösung mindestens des Netzverbandes bewirken.

2. Netzstreifen nach Anspruch 1, dadurch gekennzeichnet, daß er aus einem Kunststoffmaterial mit mindestens einem Zusatz gefertigt ist, der unter längerfristiger Lichteinwirkung eine den Kunststoffverband auflösende Veränderung des Kunststoffmaterials bewirkt.

3. Neztstreifen nach Anspruch 1, dadurch gekennzeichnet, daß er aus einem Kunststoffmaterial mit mindestens einem Zusatz gefertigt ist, der durch längerfristige Einwirkung von Luft und/oder Feuchtigkeit eine den Kunststoffverband auflösende Veränderung erfährt.

4. Netzstreifen nach Anspruch 1, dadurch gekennzeichnet, daß er aus organischen, ungiftigen und von Vieh freßbaren Materialien gefertigt ist, von denen mindestens eines durch längerfristige Umwelteinwirkung, nämlich durch Licht und/oder Feuchtigkeit und/oder Lufteinwirkung, eine mindestens den Netzverband auflösende Veränderung erfährt.

5. Netzstreifen nach Anspruch 1, dadurch gekennzeichnet, daß er aus Materialien gefertigt ist, die sein vollständiges giftstoffreies Zersetzen im Boden erlauben.

6. Netzstreifen nach Anspruch 4 oder 5, dadurch gekennzeichnet, daß er mindestens teilweise aus einem zur Netzbildung plastifizierbaren Stärkepräparat gefertigt ist.
